# EUROPEAN PATENT APPLICATION

(11) **EP 4 418 397 A1**
(43) Date of publication of application: **21.08.2024**
(21) Application number: 23880082.5
(22) Date of filing: 04.10.2023
(51) Int. Cl.: H01M 10/0583, H01M 10/04, H01M 50/595, H01M 50/586, H01M 50/531, C09J 133/08

(54) **STACK-AND-FOLD TYPE ELECTRODE ASSEMBLY EMPLOYING THICKNESS-SUPPLEMENTING PART, METHOD FOR MANUFACTURING SAME, AND SECONDARY BATTERY INCLUDING SAME**

(30) Priority: 21.10.2022 KR 20220136433; 25.09.2023 KR 20230127848
(71) Applicant: LG Energy Solution, Ltd., Seoul 07335 (KR)
(72) Inventor: LEE, Sung Jun, Yuseong-gu, Daejeong 34122 (KR)
(74) Representative: Goddar, Heinz J.
(86) International application number: PCT/KR2023/015233
(87) International publication number: WO 2024/085503

(57) **Abstract**

According to one embodiment of the present disclosure, an electrode assembly with a structure in which a plurality of unit cells are wound by a separation film,
wherein the electrode assembly comprises a first unit cell and a second unit cell located at the outermost parts on both sides,
wherein the unit cells comprise at least one selected from the group consisting of a cathode and anode, and a separator, the cathode and the anode each have a flat part where the thickness of the active material layer is constant and an inclined part where the thickness of the active material layer decreases toward the protruding direction of tabs, and
wherein a first thickness supplement unit and a second thickness supplement unit that supplement for the thickness difference of the flat part and the inclined part are formed between the first unit cell and the outermost separation film facing the first unit cell, and between the second unit cell and the outermost separation film facing the second unit cell, respectively, a manufacturing method thereof, and a secondary battery comprising the same are provided.

## Description

### [TECHNICAL FIELD]

### Cross Citation with Related Application(s)

This application claims the benefit of Korean Patent Application No. 10-2022-0136433 filed on October 21, 2022 and Korean Patent Application No. 10-2023-0127848 filed on September 25, 2023 in the Korean Intellectual Property Office, the disclosures of which are incorporated herein by reference in their entirety.

The present disclosure relates to a stack and folding type electrode assembly with thickness supplement unit, a manufacturing method thereof, and a secondary battery comprising the same.

### [BACKGROUND]

As the technology development of and the demand for mobile devices have increased, the demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Depending on the shape of the battery case, a secondary battery may be classified into a cylindrical battery where the electrode assembly is built into in a cylindrical metal can, a prismatic battery in which the electrode assembly is built into a prismatic metal can, and a pouch-type battery where the electrode assembly is mounted in a pouch of an aluminum laminate.

Meanwhile, the electrode assembly mounted in the battery case serves as a power generating element, having a cathode/separator/anode stack structure, which can be charged and discharged. The electrode assembly may be classified into a jelly roll type, a stacked type and a stack and folding type. The jelly roll type has a structure in which a long sheet type cathode and a long sheet type anode, to which active materials are applied, are wound in a state in which a separator is disposed between the cathode and the anode, the stacked type has a structure in which a plurality of cathodes having a predetermined size and a plurality of anodes having a predetermined size are sequentially stacked in a state in which separators are disposed respectively between the cathodes and the anodes, and the stack and folding type is a combination of the a jelly roll type and the stacked type, which has a structure in which unit cells are disposed on a separation film and then wound up.

In recent years, development of secondary batteries in which stack and folding type electrode assembly is built into a pouch-type case has become active.

The cathode and the anode used in the production of such electrode assemblies are manufactured by mixing materials such as an active material, a conductive material, and a binder with a solvent to prepare a slurry, and then applying it to the current collector. In such a case, since the slurry is a viscous liquid material, it flows on the current collector, and a sliding phenomenon occurs in which the thickness of the flowing portion becomes thinner.

This sliding phenomenon occurs at the interface between the coated part to which the slurry is applied and the uncoated part to which the slurry is not applied, which is generally located at the upper end of the pouch cell.

However, in the portion where the thickness becomes thinner due to the sliding phenomenon, the adhesive force between the electrode and the separator becomes weaker, or the electrode and the separator are not adhered at all, so that the distance between the cathode-separator-anode increases, which thus increases resistance and promotes side reactions. Therefore, such problems ultimately lead to a decrease in battery performance.

Thus, recently, in order to solve the above problems, a roller tilt method in which the rolling roller is twisted and rolled as a whole, a sub-roller method which presses the upper end once more through an additional roller, a JF taping method which attaches tape to a slip sheet at the jig formation stage so that the upper end of the cell receives similar pressure to the center of the cell, and the like have been developed.

However, the roller tilt method can improve adhesion at the upper end, but has the problem that the adhesive force at the lower end becomes weaker or the possibility of non-adhesion increases. The sub-roller method is difficult to fine-tune, and has no guide to optimal conditions, so there are side effects caused by over-pressing. The JF taping method has the problem that when tolerances occur in cell positions within the jig formation device, pressure differences may occur, which may cause performance deviations between cells.

Therefore, there is a need to develop a secondary battery technology that improves the adhesive force at the upper end between the electrode and the separation film, while solving the above problems, and does not cause additional problems.

### [DETAILED DESCRIPTION OF THE INVENTION]

### [Technical Problem]

It is an object of the present disclosure to provide an electrode assembly and a secondary battery that supplement for the thickness of the inclined part where the thickness of an active material layer becomes thinner, with the active material layer being formed by sliding that occurs during the manufacturing process of the electrode, thereby improving an adhesive force between the upper end of the electrode and the separation film, preventing resistance increase or side reactions resulting therefrom, and improving life characteristics.

It is another object of the present disclosure to provide an electrode assembly and a secondary battery that can prevent the problem of weakening adhesive force due to electrolyte wetting of electrode assembly components.

It is yet another object of the present disclosure to provide an electrode assembly that exhibits the above effects and additionally does not cause the problems of battery performance deviation due to differences in the degree of improvement between cells, and also does not cause problems resulting from weakening of adhesive force at the lower end or over-pressing.

The objects of the present disclosure are not limited to the foregoing objects, and any other objects and advantages not mentioned herein should be clearly understood by those skilled in the art from the following description and the accompanying drawing.

### [Technical Solution]

According to one embodiment of the present disclosure, there is provided an electrode assembly with a structure in which a plurality of unit cells are wound by a separation film,
wherein the electrode assembly comprises a first unit cell and a second unit cell located at the outermost parts on both sides,
wherein the unit cells comprise at least one selected from the group consisting of a cathode and anode, and a separator, the cathode and the anode each have a flat part where the thickness of the active material layer is constant and an inclined part where the thickness of the active material layer decreases toward the protruding direction of tabs, and
wherein a first thickness supplement unit and a second thickness supplement unit that supplement for the thickness difference of the flat part and the inclined part are formed between the first unit cell and the outermost separation film facing the first unit cell, and between the second unit cell and the outermost separation film facing the second unit cell, respectively.

Wherein, the first thickness supplement unit and the second thickness supplement unit are formed to cover the inclined part in a direction in which the tabs protrude from the cathode and the anode.

At this time, the first thickness supplement unit and the second thickness supplement unit may be formed to have a length corresponding to or longer than the upper end length of the outermost electrode of the first unit cell and the second unit cell, in a direction perpendicular to the direction in which the tabs protrude.

More specifically, the first thickness supplement unit and the second thickness supplement unit may comprise a cover part that covers a portion corresponding to the inclined part, and an extension part that extends longer than the separation film in the direction in which the tabs protrude from the cathode and the anode and covers a portion of the separation film and the tabs.

The first thickness supplement unit and the second thickness supplement unit may comprise recessed parts that are recessed inward from the separation film at a portion where the tabs are located.

Furthermore, according to the present disclosure, in order to prevent weakening of adhesive force between components due to electrolyte wetting, the first thickness supplement unit and the second thickness supplement unit may be adhered directly to each other, and specifically, they may be adhered to each other on the outside of the separation film. For ease of manufacturing, the first thickness supplement unit and the second thickness supplement unit may be, for example, a double-sided tape respectively.

At this time, the double-sided tape may be an acrylic tape in which an acrylic adhesive layer is formed on both surfaces of a substrate.

On the other hand, the first unit cell and the second unit cell may have a form in which a cathode is located at a portion facing the first thickness supplement unit and the second thickness supplement unit, respectively.

According to another embodiment of the present disclosure, there is provided a method for manufacturing the electrode assembly.

The electrode assembly can be manufactured by a method comprising: forming a first thickness supplement unit and a second thickness supplement unit in the end of the separation film at the position where the first unit cell and the second unit cell located at the outermost part of the electrode assembly are arranged, arranging the plurality of unit cells including the first unit cell and the second unit cell, so that the upper ends of the first unit cell and the second unit cell are located at a portion where the first thickness supplement unit and the second thickness supplement unit are formed, then folding and rolling them.

On the other hand, the unit cells may comprise tabs protruding from an upper end of the unit cells, and the first thickness supplement unit and the second thickness supplement unit may comprise, specifically, two recessed parts respectively.

The first thickness supplement unit and the second thickness supplement unit may be formed such that the recessed parts are directed toward an end of the separation film, and the first unit cell and the second unit cell may be arranged such that the tabs of the first unit cell and the second unit cell are located in the recessed parts.

More specifically, the unit cells comprises at least one selected from the group consisting of a cathode and an anode, and a separator, wherein the cathode and the anode each have a flat part where the thickness of the active material layer is constant and an inclined part where the thickness of the active material layer decreases toward the protruding direction of the tab.

The upper ends of the first unit cell and the second unit cell may correspond to the inclined part.

On the other hand, the first thickness supplement unit and the second thickness supplement unit are adhered to each other by the rolling on the outside of the separation film.

According to yet another embodiment of the present disclosure, there is provided a secondary battery comprising the electrode assembly and an electrolyte.

### [BRIEF DESCRIPTION OF THE DRAWINGS]

FIG. 1 is a cross-sectional view of an electrode assembly according to an embodiment of the present disclosure taken in the protruding direction of the tabs;
FIG. 2 is a schematic diagram showing a top view of the electrode assembly in a state before being wound up according to an embodiment of the present disclosure;
FIG. 3 is an enlarged view which enlarges and shows a formation portion of the first unit cell and the first thickness supplement unit of FIG. 1;
FIG. 4 is an enlarged view of the end of the separation film of FIG. 2 where the first thickness supplement unit 1310 is formed;
FIG. 5 is a cross-sectional view of the electrode assembly according to an embodiment of the present disclosure taken in a direction perpendicular to the protruding direction of the tabs; and
FIG. 6 is a cross-sectional view of the electrode assembly according to another embodiment of the present disclosure taken in a direction perpendicular to the protruding direction of the tabs.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

An electrode assembly according to one embodiment of the present disclosure is an electrode assembly with a structure in which a plurality of unit cells are wound by a separation film,
wherein the electrode assembly comprises a first unit cell and a second unit cell located at the outermost parts on both sides,
wherein the unit cells comprise at least one selected from the group consisting of a cathode and anode, and a separator, the cathode and the anode each have a flat part where the thickness of the active material layer is constant and an inclined part where the thickness of the active material layer decreases toward the protruding direction of tabs, and
wherein a first thickness supplement unit and a second thickness supplement unit that supplement for the thickness difference of the flat part and the inclined part are formed between the first unit cell and the outermost separation film facing the first unit cell, and between the second unit cell and the outermost separation film facing the second unit cell, respectively.

Further, a method for manufacturing such an electrode assembly comprises forming a first thickness supplement unit and a second thickness supplement unit in the end of the separation film at the position where the first unit cell and the second unit cell located at the outermost part of the electrode assembly are arranged, arranging the plurality of unit cells including the first unit cell and the second unit cell, so that the upper ends of the first unit cell and the second unit cell are located at a portion where the first thickness supplement unit and the second thickness supplement unit are formed, then folding and rolling them.

An electrode assembly having such a structure and a manufacturing method thereof will be described below with reference to the drawings.

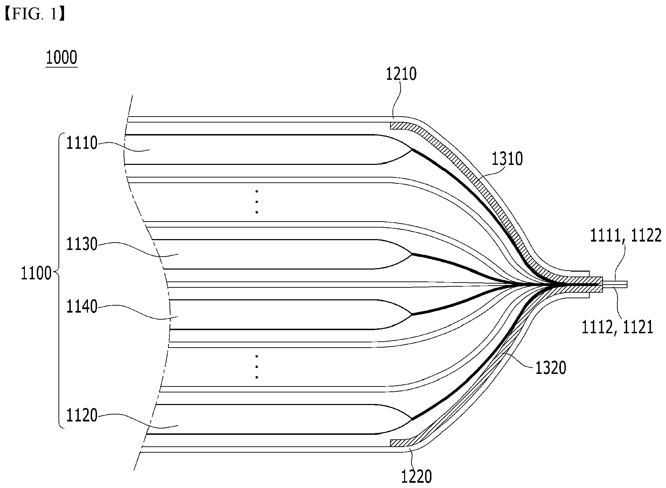

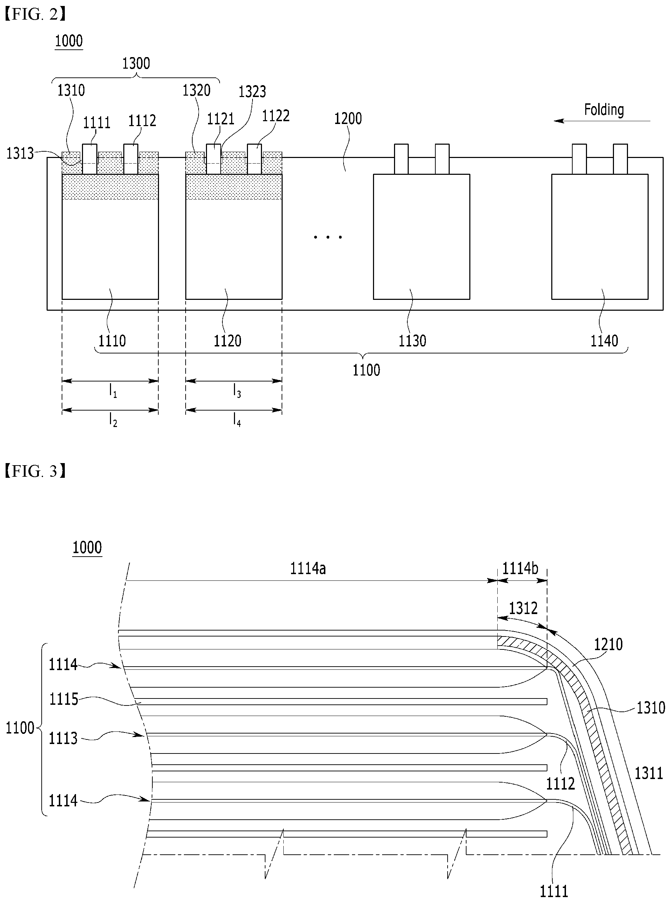

FIG. 1 is a cross-sectional view of an electrode assembly according to an embodiment of the present disclosure taken in the protruding direction of the tabs, and FIG. 2 is a schematic diagram showing a top view of the electrode assembly in a state before being wound up according to an embodiment of the present disclosure.

First, referring to FIGS. 1 and 2 together, the electrode assembly 1000 according to the present disclosure has a structure in which a plurality of unit cells 1100 are wound by a separation film 1200, wherein the plurality of unit cells 1100 include a unit cell 1130 in a direction wound from a unit cell 1140 of the core part, and include up to a first unit cell 1110 and a second unit cell 1120 located at the outermost part of the electrode assembly 1000.

Further, a first thickness supplement unit 1310 and a second thickness supplement unit 1320 are formed at ends in the direction in which the tabs 1111, 1112, 1121 and 1122 are protruded, between the first unit cell 1100 and the outermost separation film 1210 facing the first unit cell 1100, and between the second unit cell 1200 and the outermost separation film 1220 facing the second unit cell 1200, respectively.

Specifically, the first thickness supplement unit 1310 is formed to have a length l2 corresponding to or longer than the upper end length 11 of the first unit cell 1110 in a direction perpendicular to the direction in which the tabs 1111 and 1112 protrude. The second thickness supplement unit 1320 is also formed to have a length l4 corresponding to or longer than the upper end length 13 of the outermost electrode of the second unit cell 1120 in a direction perpendicular to the direction in which the tabs 1121 and 1122 protrude.

Therefore, the thickness supplement units 1300 do not interfere with the winding of the separation film 1200. That is, if the formation lengths l2 and l4 of the first thickness supplement unit 1310 and the second thickness supplement unit 1320 are shorter than the upper end lengths 11 and 13 of the outermost electrodes of the first unit cell 1110 and the second unit cell 1120, there is a problem that a part of the electrode cannot be covered, and resistance is concentrated in that part or side reactions become more serious. However, if the lengths are too long, the thickness supplement units may be disturbed during the folding process or wrinkles may be created at the folded part, which may lead to weakening of the adhesive force. Therefore, it is preferable to form the length within a range that does not affect adjacent unit cells. Meanwhile, as described above, the present application is intended to solve the problem of not being able to secure sufficient adhesive force between the electrode and the separator at the end of the electrode due to a sliding phenomenon during electrode manufacture.

Therefore, the first thickness supplement unit 1310 and the second thickness supplement unit 1320 may be formed to cover electrode sliding phenomenon portions in the direction in which the tabs 1111, 1112, 1121 and 1122 protrude from the outermost unit cells 1110 and 1120.

To explain this in more detail, FIG. 3 schematically shows an enlarged view of a portion where the first unit cell of FIG. 1 are formed.

Referring to FIG. 3, the first unit cell 1110 has a structure including one anode 1113, two cathodes 1114, and separators 1115 interposed between them, and the cathode 1114 located on the outermost side has a flat part 1114a where the thickness of the active material layer is constant and an inclined part 1114b where the thickness of the active material layer decreases toward the protruding direction of the tabs 1111 and 1112.

Although not described using reference numerals, it goes without saying that the anode may also have a structure including a flat part and an inclined part.

Since the distance from the inclined part 1114b to the separation film 1210 is greater than the distance from the flat part 1114a to the outermost separation film 1210, the adhesion does not occur well if the same rolling is performed during the manufacturing process of the electrode assembly 1000. However, according to the present disclosure, since the first thickness supplement unit 1310 is formed to cover the portion corresponding to the inclined part 1114b of the cathode 1114 located at the outermost side, these distances can be reduced, so that during rolling, the outermost separation film 1210 and the inclined part 1114b of the cathode 1114 may be adhered to each other using a pressure similar to that of the flat part 1114a.

Therefore, according to the present disclosure, the pressure difference caused by rolling between the inclined part 1114b and the flat part 1114a can be reduced, thereby exhibiting the effects of improving adhesive force and life performance which are intended by the present application.

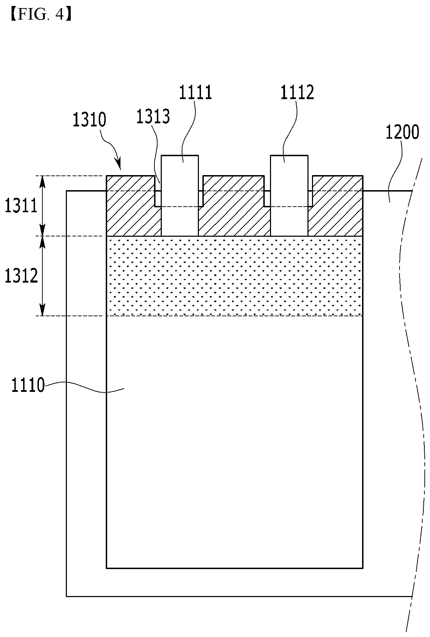

Further, in order to consider a more specific structure of the first thickness supplement unit 1310 and the second thickness supplement unit 1320 formed to cover the inclined part 1114b, an enlarged view of the end where the first thickness supplement unit 1310 is formed is shown in FIG. 4.

Referring to FIG. 4, the first thickness supplement unit 1310 has a structure including: a cover part 1312 that covers a portion corresponding to the inclined part 1114b in the direction in which the tabs 1111 and 1112 protrude from the first unit cell 1110, and an extension part 1311 that extends longer than the separation film 1200 in the protruding direction of the tabs 1111 and 1112 and covers a part of the separation film 1200 and the tabs 1111 and 1112. The extension part 1311 has a structure including a recessed part 1313 that is recessed inward from the separation film 1200 at a portion where the tabs 1111 and 1112 are located.

That is, the first thickness supplement unit 1310 and the second thickness supplement unit 1320 can increase adhesive force with the electrodes as a whole despite the sliding phenomenon of the electrodes included in the unit cells 110, due to a cover part 1312 covering the upper end of the outermost electrode in the direction in which the tabs 1111, 1112, 1121 and 1122 protrude from the outermost unit cells 1110 and 1120.

Further, referring again to FIGS. 1 and 2 together, the first thickness supplement unit 1310 and the second thickness supplement unit 1320 may have a structure in which extension parts 1311 are adhered to each other on the outside of the separation film 1200.

That is, according to the present disclosure, the first thickness supplement unit 1310 and the second thickness supplement unit 1320 include an extension part 1311 that covers a separation film 1200 and a part of the tabs 1111 and 1112, and is thereby formed to the outside of the separation film 1200. Therefore, the outermost separation films 1210 and 1220 can be adhered to each other, resulting in more robust adhesion between the components of the electrode assembly, and minimizing the widening of the interval even during cycling despite subsequent electrolyte wetting

Thereby, it is possible to eliminate the conventional problem of increased resistance and side reactions in the protruding direction of the tabs 1111, 1112, 1121 and 1122.

Furthermore, the first thickness supplement unit 1310 and the second thickness supplement unit 1320 include a recessed part 1313, whereby the tabs 1111 and 1112 can be attached and welded like the taps of other unit cells 1120, 1130 and 1140 to exhibit the effect of not being an obstacle in making electrical connections, and at the same time, can maximize the adhesion portion of the thickness supplement unit 1300 and maximize the adhesive force between the electrode and the separator.

Although the first thickness supplement unit 1310 has been described in FIG. 4, it goes without saying that the same applies to the second thickness supplement unit 1320.

Meanwhile, referring again to FIG. 3, FIG. 3 shows a configuration in which the cathode is located at the outermost part of the first unit cell 1110, and the cathode is located at a portion facing the first thickness supplement unit 1310, but the anode may be located, and either case may be included in the present disclosure. Further, the same also applies to the second unit cell 1120 located at the outermost part.

The unit cells 1100 also shows, as an example of the first unit cell 1100, a bi-cell structure in which electrodes with the same polarity are disposed on both sides, but each of the unit cells 1100 is not limited, and may be a full cell in which electrodes with different polarities are disposed on both sides, a bicell having a structure in which electrodes with the same polarity are disposed on both sides, and a monocell having a structure in which one electrode and a separator are stacked.

Further, the type and material of the thickness supplement units 1310 are not limited, and commonly used thickness supplement units can be applied. Particularly, tape materials used in secondary batteries can be used more preferably, and for example, an acrylic tape having an acrylic adhesive layer formed on both sides of the substrate can be used. Meanwhile, the manufacturing method of the electrode assembly 1000 according to an embodiment of the present disclosure will be described with reference to FIGS. 2 and 4 again.

Referring to FIG. 2, the electrode assembly 1000 is manufactured by a method which comprises forming a first thickness supplement unit 1310 and a second thickness supplement unit 1320 in the end of the separation film 1200 at the position where the first unit cell 1110 and the second unit cell 1120 located at the outermost part of the electrode assembly 1000 are arranged, arranging the plurality of unit cells 1100 including the first unit cell 1110 and the second unit cell 1120, so that the upper ends of the first unit cell 1110 and the second unit cell 1120 are located at a portion where the first thickness supplement unit 1310 and the second thickness supplement unit 1320 are formed, then folding and rolling them.

Specifically, referring to FIGS. 2 and 4 together, first, the first thickness supplement unit 1310 and the second thickness supplement unit 1320 are formed in the end of the separation film 1200 at the position where the first unit cell 1110 and the second unit cell 1120 are arranged, such that the recessed parts 1313 and 1323 formed therein are directed toward the end of the separation film 1200, and then the first unit cell 1110 and the second unit cell 1120 are arranged such that the tabs 1111, 1112, 1121 and 1122 of the first unit cell 1110 and the second unit cell 1120 are located in the recessed parts 1313 and 1323.

Further, as mentioned above, the unit cells 1100 include at least one selected from the group consisting of a cathode and an anode, and a separator, wherein the cathode and the anode each have a flat part where the thickness of the active material layer is constant and an inclined part where the thickness of the active material layer decreases toward the protruding direction of the tabs, so that the upper ends of the first unit cell 1110 and the second unit cell 1120 located in the portion where the first thickness supplement unit 1310 and the second thickness supplement unit are formed correspond to the inclined part.

At this time, the unit cells 1100 are arranged such that cathodes and anodes are alternately stacked in the stacking direction after winding.

Meanwhile, after all the unit cells 1100 are arranged on the separation film 1200 as shown in FIG. 2, folding can be performed in one direction.

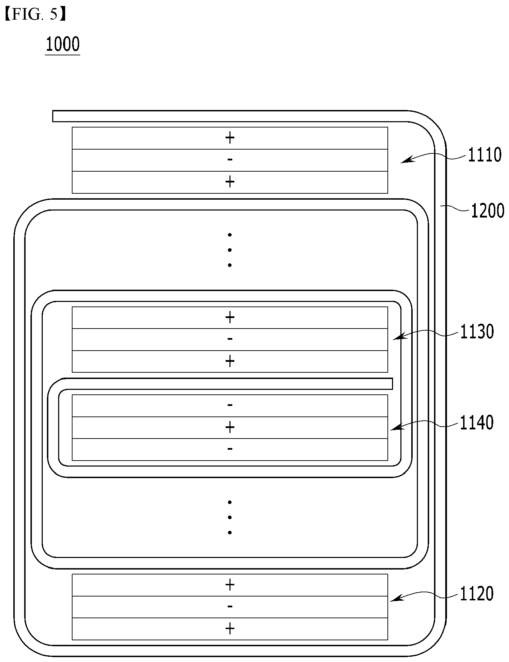

In order to clearly show the electrode assembly 1000 that has undergone such folding, FIG. 5 schematically shows a cross-sectional view of the electrode assembly 1000 taken in a direction perpendicular to the protruding direction of the tabs 1111, 1112, 1121 and 1122.

Referring to FIG. 5, the unit cells 1110, 1120, 1130 and 1140 are wound in one direction by the separation film 1200, and cathodes and anodes are alternately arranged in the stacking direction.

Alternatively, the electrode assembly may also be manufactured by arranging the unit cells on a separation film and then performing alternating folding in a zigzag manner.

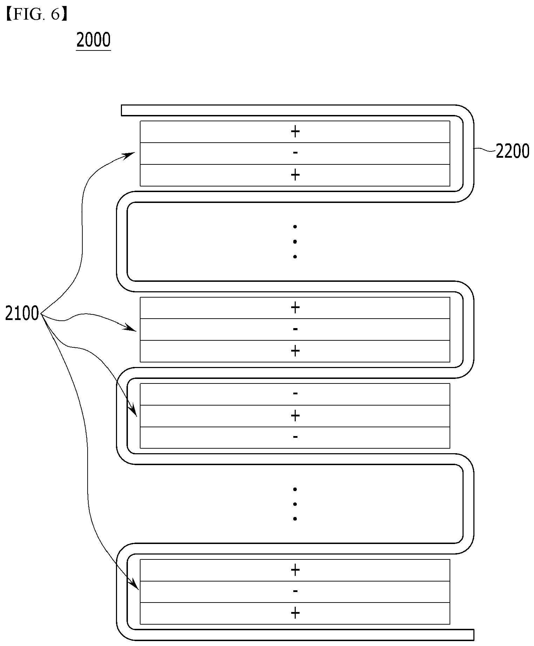

In order to clearly show the electrode assembly 2000 that has been folded in this way, FIG. 6 schematically shows a cross-sectional view of the electrode assembly 2000 taken in a direction perpendicular to the protruding direction of the tabs.

Referring to FIG. 6, unit cells 2100 are alternately wound in a zigzag manner by the separation films 2200, and cathodes and anodes are alternately arranged in the stacking direction.

At this time, FIGS. 5 and 6 show a configuration in which the cathode is located at the outermost edge of both sides, but is not limited thereto. It goes without saying that the anode may be located at the outermost corner of both sides, the cathode may be located at the outermost corner of one side, and the cathode may also be located at the outermost corner of one side.

Returning again to FIG. 2 and FIG. 1, when folding is completed as described above, the electrode assembly 1000 is rolled.

By such rolling, the separation film 1200 and the unit cells 1100 are adhered and laminated to each other and are firmly coupled, and the thickness is also supplemented at the portion corresponding to the inclined part, so that the adhesive force can be made similar as a whole.

Further, at this time, the first thickness supplement unit 1310 and the second thickness supplement unit 1320 may also be adhered to each other.

As a result, the electrode assembly 1000 according to an embodiment of the present application is manufactured, and the application of the thickness supplement unit 1300 can be effective in eliminating problems such as increased resistance in the protruding direction of the tabs 1111, 1112, 1121 and 1122, acceleration of side reactions, and lithium plating, which are intended by the present application.

Meanwhile, the composition and structure of the cathode, anode, and separator constituting the other electrode assembly are known in the art, and therefore, a detailed descriptions thereof are omitted herein.

Meanwhile, the present disclosure provides a secondary battery including an electrode assembly and an electrolyte, and provides a battery module including the same.

Such secondary batteries and battery modules are also known in the art, and therefore, a detailed description excluding the above configuration are omitted herein.

Although preferred embodiments of the present disclosure have been described above in detail with reference to the drawings, the scope of the present disclosure is not limited thereto, and various modifications and improvements made by those skilled in the art using the basic concept of the present disclosure as defined in the appended claims also fall within the scope of the present disclosure.

### [Description of Reference Numerals]

1000, 2000: electrode assembly
1100, 2100: unit cells
1110: first unit cell
1120: second unit cell
1200, 2200: separation film
1300: thickness supplement units
1310: first thickness supplement unit
1320: second thickness supplement unit

### [Industrial Applicability]

According to the present disclosure, the electrode assembly of the present disclosure includes a first unit cell and a second unit cell located at the outermost parts on both sides, and a first thickness supplement unit and a second thickness supplement unit formed at the upper ends of the unit cells where the inclined part is formed between the outermost separation films facing these unit cells, which thus supplements the thickness of the inclined part to improve the adhesive force between the electrode and the separation film at the upper end part, and prevent the increase in resistance or side reaction resulting therefrom, thereby improving the life characteristics.

In addition, the first thickness supplement unit and the second thickness supplement unit are adhered directly in directions facing each other, thereby preventing the adhesive force from weakening due to electrolyte wetting of each component of the electrode assembly, and further improving the life characteristics.

In addition, the above effects can be achieved in an extremely simple manner without changing process equipment such as rolling rollers, and can be similarly applied to all electrode assemblies, whereby there is no problem of battery performance deviation due to differences in the degree of improvement between batteries, and it is also effective in preventing problems caused by weakening of adhesive force at the lower end or over-pressing.

## Claims

1. An electrode assembly with a structure in which a plurality of unit cells are wound by a separation film,
wherein the electrode assembly comprises a first unit cell and a second unit cell located at the outermost parts on both sides,
wherein the unit cells comprise at least one selected from the group consisting of a cathode and anode, and a separator, with the cathode and the anode each have a flat part where the thickness of the active material layer is constant and an inclined part where the thickness of the active material layer decreases toward the protruding direction of tabs, and
wherein a first thickness supplement unit and a second thickness supplement unit that supplement for the thickness difference of the flat part and the inclined part are formed between the first unit cell and the outermost separation film facing the first unit cell, and between the second unit cell and the outermost separation film facing the second unit cell, respectively.

2. The electrode assembly according to claim 1, wherein:
the first thickness supplement unit and the second thickness supplement unit are formed to cover the inclined part in a direction in which the tabs protrude from the cathode and the anode.

3. The electrode assembly according to claim 2, wherein:
the first thickness supplement unit and the second thickness supplement unit are formed to have a length corresponding to or longer than the upper end length of the outermost electrode of the first unit cell and the second unit cell, in a direction perpendicular to the direction in which the tabs protrude.

4. The electrode assembly according to claim 2, wherein:
the first thickness supplement unit and the second thickness supplement unit comprise a cover part that covers a portion corresponding to the inclined part, and an extension part that extends longer than the separation film in the direction in which the tabs protrude from the cathode and the anode and covers a portion of the separation film and the tabs.

5. The electrode assembly according to claim 4, wherein:
the first thickness supplement unit and the second thickness supplement unit comprise recessed parts that are recessed inward from the separation film at a portion where the tabs are located.

6. The electrode assembly according to claim 1, wherein:
the first thickness supplement unit and the second thickness supplement unit are adhered directly to each other.

7. The electrode assembly according to claim 1, wherein:
the first thickness supplement unit and the second thickness supplement unit are adhered to each other on the outside of the separation film.

8. The electrode assembly according to claim 1, wherein:
the first thickness supplement unit and the second thickness supplement unit are a double-sided tape respectively.

9. The electrode assembly according to claim 1, wherein:
the double-sided tape is an acrylic tape in which an acrylic adhesive layer is formed on both surfaces of a substrate.

10. The electrode assembly according to claim 1, wherein:
the first unit cell and the second unit cell have a form in which a cathode is located at a portion facing the first thickness supplement unit and the second thickness supplement unit, respectively.

11. A method for manufacturing the electrode assembly of claim 1, the method comprising:
forming a first thickness supplement unit and a second thickness supplement unit in the end of the separation film at the position where the first unit cell and the second unit cell located at the outermost part of the electrode assembly are arranged, arranging the plurality of unit cells including the first unit cell and the second unit cell, so that the upper ends of the first unit cell and the second unit cell are located at a portion where the first thickness supplement unit and the second thickness supplement unit are formed, then folding and rolling them.

12. The method for manufacturing an electrode assembly according to claim 11, wherein:
the unit cells comprises tabs protruding from an upper end of the unit cells,
the first thickness supplement unit and the second thickness supplement unit comprises two recessed parts respectively, and
the first thickness supplement unit and the second thickness supplement unit are formed such that the recessed parts are directed toward an end of the separation film, and the first unit cell and the second unit cell are arranged such that the tabs of the first unit cell and the second unit cell are located in the recessed parts.

13. The method for manufacturing an electrode assembly according to claim 11, wherein:
the unit cells comprises at least one selected from the group consisting of a cathode and an anode, and a separator, wherein the cathode and the anode each have a flat part where the thickness of the active material layer is constant and an inclined part where the thickness of the active material layer decreases toward the protruding direction of the tab, and
the upper ends of the first unit cell and the second unit cell correspond to the inclined part.

14. The method for manufacturing an electrode assembly according to claim 11, wherein:
the first thickness supplement unit and the second thickness supplement unit are adhered to each other by the rolling on the outside of the separation film.

15. A secondary battery comprising the electrode assembly of claim 1 and an electrolyte.
